(19) Europäisches Patentamt
European Patent Office
Office européen des brevets

(11) **EP 4 386 930 A1**

(12) **EUROPEAN PATENT APPLICATION**
published in accordance with Art. 153(4) EPC

(43) Date of publication:
**19.06.2024 Bulletin 2024/25**

(21) Application number: **23777584.6**

(22) Date of filing: **09.01.2023**

(51) International Patent Classification (IPC):
***H01M 10/0587*** (2010.01)

(52) Cooperative Patent Classification (CPC):
**H01M 4/02; H01M 10/0587; H01M 50/147;**
**Y02E 60/10**

(86) International application number:
**PCT/CN2023/071234**

(87) International publication number:
**WO 2023/185205 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 CN 202210319849**

(71) Applicant: **Contemporary Amperex Technology
Co., Limited
Ningde City, Fujian 352100 (CN)**

(72) Inventors:
• **CHEN, Yujie
Ningde City, Fujian 352100 (CN)**
• **LIU, Feng
Ningde City, Fujian 352100 (CN)**
• **GE, Xiaoming
Ningde City, Fujian 352100 (CN)**

(74) Representative: **Gong, Jinping
CocreateIP
Neumarkterstr. 21
81673 München (DE)**

(54) **ELECTRODE ASSEMBLY, CELL, BATTERY AND ELECTRIC DEVICE**

(57) Some embodiments of this application disclose an electrode assembly, a battery cell, a battery, and an electrical device. The electrode assembly includes a positive electrode layer, a negative electrode layer, and an separator. The positive electrode layer, the negative electrode layer, and the separator are wound to form the electrode assembly. The separator wraps on both sides of each positive electrode layer and each negative electrode layer. A current collector of the negative electrode layer is made of a three-dimensional porous metal material. The negative electrode layer includes a first negative electrode section and a second negative electrode section extending along a winding direction and connected to each other. A winding start end of the second negative electrode section is substantially aligned with a winding termination end of the positive electrode layer. A thickness $d_2$ of the second negative electrode section is less than a thickness $d_1$ of the first negative electrode section. The technical solution hereof enables active sites in a porous metal material to match deposited metal ions of a positive electrode in a battery that uses a three-dimensional porous metal material as a negative electrode, avoids growth of spongy "dead" metal caused by excess active site space in the negative electrode, and in turn, improves the cycle performance and space utilization rate of the battery.

FIG. 6

**Description**

**CROSS-REFERENCE TO RELATED APPLICATIONS**

This application claims priority to Chinese Patent Application No. 202210319849.X, filed on March 29, 2022 and entitled "ELECTRODE ASSEMBLY, BATTERY CELL, BATTERY, AND ELECTRICAL DEVICE", which is incorporated herein by reference in its entirety.

**TECHNICAL FIELD**

This application relates to the technical field of batteries, and in particular, to an electrode assembly, a battery cell, a battery, and an electrical device.

**BACKGROUND**

With the aggravation of environmental pollution, the new energy industry is attracting more and more attention. Battery technology is crucial to the development of the new energy industry.

In the development of battery technology, how to enhance the performance of a battery is an urgent technical problem in the battery technology.

**SUMMARY**

In view of the above problem, some embodiments of this application provide an electrode assembly, a battery cell, a battery, and an electrical device to enable active sites in a porous metal material to match deposited metal ions of a positive electrode in a battery that uses a three-dimensional porous metal material as a negative electrode, avoid growth of spongy "dead" metal caused by excess active site space in the negative electrode, and in turn, improve the cycle performance and space utilization rate of the battery.

According to a first aspect, an electrode assembly is provided, including a positive electrode layer, a negative electrode layer, and an separator. The positive electrode layer, the negative electrode layer, and the separator are wound to form the electrode assembly. The separator wraps on both sides of each positive electrode layer and each negative electrode layer. A current collector of the negative electrode layer is made of a three-dimensional porous metal material. The negative electrode layer includes a first negative electrode section and a second negative electrode section extending along a winding direction and connected to each other. A winding start end of the second negative electrode section is substantially aligned with a winding termination end of the positive electrode layer. A thickness $d_2$ of the second negative electrode section is less than a thickness $d_1$ of the first negative electrode section.

In an embodiment of this application, the positive electrode layer, the negative electrode layer, and the separator are wound to form an electrode assembly. Each positive electrode layer is separated from a negative electrode layer by the separator to prevent a short or open circuit caused by direct contact between the positive electrode layer and the negative electrode layer in the battery. The negative electrode layer of the three-dimensional porous metal material includes a first negative electrode section and a second negative electrode section. The winding start end of the second negative electrode section is substantially aligned with the winding termination end of the positive electrode layer. The thickness of the second negative electrode section is less than that of the first negative electrode section. By controlling the thickness of the negative electrode layer, this application enables active sites in an outermost second negative electrode section to match a capacity of metal ions in a positive electrode layer in a battery that uses a three-dimensional porous metal material as a negative electrode. In this way, this application effectively avoids growth of spongy "dead" metal caused by excess space in the second negative electrode section, and in turn, improves the cycle performance of the battery, and also improves the space utilization rate inside the battery.

In a possible embodiment, the thickness $d_2$ of the second negative electrode section is:

$$d_2 = d_1(\frac{1}{2} * x\% + 1 - x\%).$$

In the formula above, x% is a porosity of the first negative electrode section. In this embodiment of this application, the thickness $d_2$ of the second negative electrode section is caused to satisfy the above formula, so that a density of active sites on a surface of the second negative electrode section is the same as that of the first negative electrode section, thereby ensuring an appropriate positive-to-negative electrode ratio in the second negative electrode section.

In a possible embodiment, the thickness $d_2$ of the second negative electrode section is:

$$d_2 = d_1(\frac{1}{2} * x\% + (1 - x\%)/(1 + k\%)).$$

In the formula above, x% is a porosity of the first negative electrode segment, and k% is an elongation rate of the negative electrode layer. In this embodiment of this application, the thickness $d_2$ of the second negative electrode section is caused to satisfy the above formula, so that a density of active sites on a surface of the second negative electrode section is the same as that of the first negative electrode section, thereby ensuring an appropriate positive-to-negative electrode ratio in the second negative electrode section.

In a possible embodiment, the second negative electrode section is configured to be calendered so that the thickness $d_2$ of the second negative electrode section is less than the thickness $d_1$ of the first negative electrode section.

In this embodiment of this application, the second negative electrode section is calendered so that the thickness of the second negative electrode section is less than that of the first negative electrode section. This method is simple to implement, highly operable, and widely applicable in production. In addition, the calendered second negative electrode section not only possesses the same surface density as the first negative electrode section, but also improves mechanical strength of the battery.

In a possible embodiment, the second negative electrode section surrounds an outermost positive electrode layer for at most one coil.

In this embodiment of this application, in a conventional battery that uses a three-dimensional porous metal material as a negative electrode, the negative electrode layer in the middle corresponds to an upper positive electrode layer and a lower positive electrode layer. The outermost negative electrode layer corresponds to a positive electrode layer on a single side. In this way, the capacity is mismatched between the outermost negative electrode layer and the positive electrode layer, thereby giving rise to spongy "dead" metal, and eventually resulting in a short or open circuit of the battery. By causing the second negative electrode section to surround the outermost positive electrode layer and limiting the surrounding length of the second negative electrode section to one coil, this application ensures that the outermost second negative electrode section and the middle region possess the same density of active sites for metal ion deposition on a surface, and achieves a capacity balance between the positive electrode and the negative electrode of the battery as a whole.

In a possible embodiment, the positive electrode layer includes a first positive electrode section and a second positive electrode section extending along the winding direction and connected to each other. A winding start end of the second positive electrode section is substantially aligned with a winding start end of the first negative electrode section.

In this embodiment of this application, the positive electrode layer includes the first positive electrode section and the second positive electrode section. The winding start end of the second positive electrode section is substantially aligned with the winding start end of the first negative electrode section, thereby ensuring that there is a first positive electrode layer corresponding to the innermost negative electrode layer, and in turn, ensuring a balanced positive-to-negative electrode ratio in the innermost coil of the battery.

In a possible embodiment, the first positive electrode section is located between a first inner negative electrode layer and a second inner negative electrode layer. The first inner negative electrode layer is a first straight section of the negative electrode layer along the winding direction. The second inner negative electrode layer is a second straight section of the negative electrode layer along the winding direction.

In this embodiment of this application, in a conventional battery that uses a three-dimensional porous metal material as a negative electrode, there is no positive electrode layer corresponding to the innermost negative electrode layer. That is, no metal ions are deposited in the innermost coil of three-dimensional porous material, thereby wasting the material of the negative electrode and also resulting in a decline in a gravimetric energy density and a volumetric energy density of the battery. By placing a first positive electrode section between the innermost negative electrode layers, the first positive electrode section is caused to be directly oriented toward the innermost negative electrode layer, thereby improving the utilization rate of the active material and space inside the battery, and also increasing the gravimetric energy density and the volumetric energy density of the battery.

In a possible embodiment, a winding start end of the first positive electrode section extends to a bend of the negative electrode layer between the first inner negative electrode layer and the second inner negative electrode layer.

In this embodiment of this application, the first positive electrode section is made to be immediately between the innermost negative electrode layers, thereby ensuring that there is a positive electrode layer corresponding to the innermost negative electrode layer, and in turn, maximizing the utilization rate of the active material and space inside the battery.

In a possible embodiment, a thickness of the positive electrode layer is identical to a thickness of the first negative electrode section.

In this embodiment of this application, the positive electrode layer includes the first positive electrode section and the second positive electrode section. The first positive electrode section corresponds to the innermost negative electrode layer, and the second positive electrode section corresponds to the remaining negative electrode layers, thereby ensuring that the positive electrode layer is identical to the first negative electrode section in thickness, maintaining a matched state of the anion-to-cation ratio of the entire battery, avoiding growth of spongy "dead" metal in the battery, and in turn, enhancing the cycle performance of the battery.

According to a second aspect, this application provides a battery cell. The battery cell includes: the electrode assembly disclosed in the preceding embodiment; a housing with an opening, configured to accommodate the electrode assembly; and an end cap, configured to seal the opening.

According to a third aspect, this application provides a battery. The battery includes the battery cell disclosed in the preceding embodiment.

According to a fourth aspect, this application provides an electrical device. The electrical device includes the battery disclosed in the preceding embodiment. The battery is configured to provide electrical energy.

## BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.

FIG. 1 is a schematic structural diagram of a vehicle according to an embodiment of this application;
FIG. 2 is a schematic structural exploded view of a battery according to an embodiment of this application;
FIG. 3 is a schematic diagram of a battery cell according to an embodiment of this application;
FIG. 4 is a schematic diagram of an electrode assembly according to an embodiment of this application;
FIG. 5 is a schematic diagram of an electrode assembly according to another embodiment of this application;
FIG. 6 is a front view of an electrode assembly according to an embodiment of this application; and
FIG. 7 is a close-up view of a region shown in FIG. 6.

List of reference numerals:

vehicle 1, battery 2, battery cell 3;
controller 11, motor 12, box 20, electrode assembly 31, shell 32, electrode terminal 33, connecting member 34, pressure relief mechanism 35;
first box portion 201, second box portion 202, accommodation space 203, positive electrode layer 311, negative electrode layer 312, separator 313, amplified region 314, housing 321, end cap 322, positive electrode terminal 331, negative electrode terminal 332;
first positive electrode section 3111, second positive electrode section 3112, first negative electrode section 3121, second negative electrode section 3122, first inner negative electrode layer 31211, second inner negative electrode layer 31212.

## DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

In this application, battery cells may include a lithium metal secondary battery, a sodium metal battery, a magnesium metal battery, or the like. The type of the battery cell is not limited herein. The battery cell may be in various shapes such as a cylinder, a flat body, or another shape. The shape of the battery cell is not limited herein. In terms of the packaging form, the battery cell is typically classed into three types: cylindrical battery cell, prismatic battery cell, and pouch-type battery cell. The type of the battery cell is not limited herein. For ease of description in the following embodiments, a lithium metal battery is used as an example.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

In an embodiment of this application, the electrode assembly is a jelly-roll structure. For ease of description in the following embodiments, a prismatic cell is used as an example.

With the increase in the energy density required by energy storage devices and power batteries, conventional metal-ion batteries can hardly meet users' requirements for the energy density. Novel secondary batteries that use metal as a negative electrode embrace a broad prospect in potentially replacing commercial metal-ion batteries.

A metal battery typically uses a three-dimensional porous metal as a current collector, thereby not only reducing a local current density and suppressing the growth of dendrites, but also depositing the metal in the three-dimensional metal pores to reduce the volume change of the battery during charging and discharging. The application of three-dimensional porous metal current collectors has been widely accepted in theory. In academia, button batteries with three-dimensional porous metal current collectors have exhibited superior electrochemical performance over the metal-ion batteries in some aspects. However, in practical applications, the operability is not high.

First of all, using a common foil material as an example, in the design of a commonly used battery cell such as a jelly-roll hard shell cell, a jelly-roll pouch cell, or a jelly-roll cylindrical cell, the material cost of a positive electrode is high, and the positive electrode is a main source of lithium ions, and therefore, a negative electrode needs to be designed as a form of wrapping the positive electrode (the area of the negative electrode is larger than the area of the positive electrode, and each positive electrode region is directly oriented toward a negative electrode region). As a simplest and most direct effect of such a design, a negative electrode section is directly oriented toward another negative electrode section in the innermost layer of the battery cell. In every battery cell, both sides of a current collector are coated with an active material, which is to say that the battery cell is double-side coated. Therefore, negative active materials on the outer side of the outermost negative electrode layer and the inner side of the innermost negative electrode layer are not utilized, thereby not only wasting the material of the negative electrode, resulting in an increase in the cost of the battery, but also decreasing the gravimetric energy density and volumetric energy density of the battery cell.

The three-dimensional porous metal material is different from the conventional foil material. In the conventional foil material, the metal ions from the positive electrode material are unable to be deposited in the outermost graphite layer and the innermost graphite layer by penetrating the foil material, thereby ensuring that the positive-to-negative electrode ratio in the section in which the positive electrode section is directly oriented toward the negative electrode section falls within the designed range. By contrast, in a metal battery that uses a three-dimensional porous metal material as a negative electrode, the metal ions from the positive electrode are able to be freely shuttled and deposited inside the negative electrode. In this way, the metal ions may be deposited in the outermost layer or the innermost layer. This means that, in the innermost and outermost layers, negative active sites in double layers correspond to positive active sites in a single layer, thereby resulting in a drastic imbalance of the positive-to-negative electrode ratio. The unconstrained metal ions begin to deposit and grow freely, and are prone to react with an electrolyte solution to generate spongy "dead" metal. The capacity of the battery cell is usually constrained by the number of active metal ions in the battery cell. Therefore, if the above situation occurs, a large number of active metal ions will be lost, resulting in a drastic capacity loss. The generation of the spongy "dead" metal consumes a large amount of electrolyte solution and generates gas, thereby aggravating the gas production of the battery cell and reducing the residual amount of the electrolyte solution. Therefore, a solution is urgently needed to solve this problem in the metal batteries that use a three-dimensional porous metal material as a negative electrode.

In view of the above considerations, this application provides a porous metal electrode with a diversified ending to enable active sites in a porous metal material to match deposited metal ions of a positive electrode in a battery that uses a three-dimensional porous metal material as a negative electrode, avoid growth of spongy "dead" metal caused by excess active site space in the negative electrode, and in turn, improve the cycle performance and space utilization rate of the battery.

The porous metal electrode with a diversified ending according to an embodiment of this application is applicable to an electrode assembly, a battery cell, a battery, and an electrical device that uses a battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in embodiments of this application.

For ease of description in the following embodiments, a vehicle is used as an example of the electrical device.

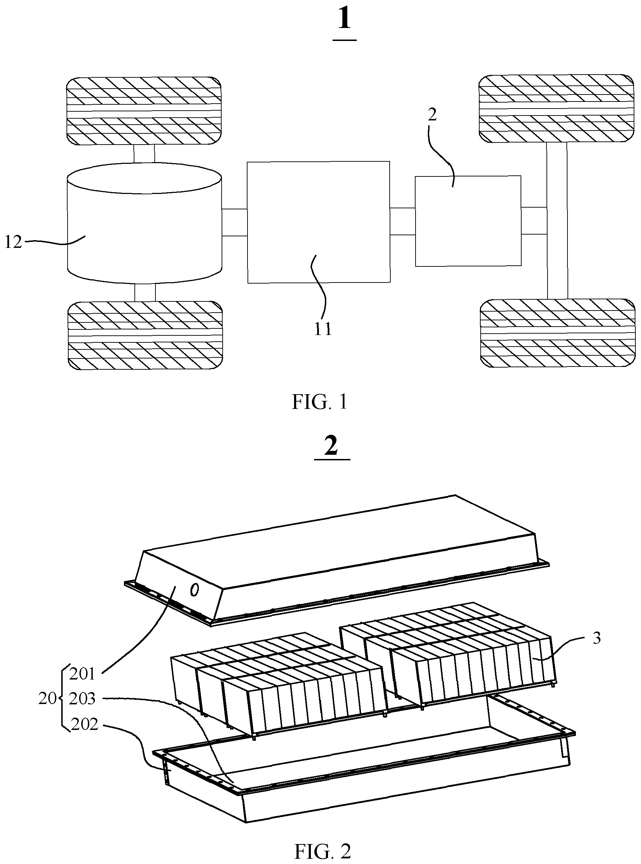

FIG. 1 is a schematic structural diagram of a vehicle 1 according to an embodiment of this application. As shown in FIG. 1, a battery 2 is disposed inside the vehicle 1. The battery 2 may be disposed at the bottom, front, or rear of the vehicle 1. The battery 2 may be configured to supply power to the vehicle 1. For example, the battery 2 may serve as an operating power supply of the vehicle 1.

The vehicle 1 may further include a controller 11 and a motor 12. The controller 11 is configured to control the battery 2 to supply power to the motor 12, for example, to meet electrical energy requirements in starting, navigating, or running the vehicle 1.

In some embodiments of this application, the battery 2 serves not only as an operating power supply of the vehicle 1, but may also serve as a driving power supply of the vehicle 1 to provide driving power for the vehicle 1 in place of or partly in place of fuel oil or natural gas.

FIG. 2 is a schematic exploded view of a battery 2 according to an embodiment of this application. As shown in FIG. 2, the battery 2 includes a box 20 and a battery cell 3. The battery cell 3 is accommodated in the box 20.

The box 20 is configured to accommodate the battery cell 3. The box 20 may be in diverse structures. In some embodiments, the box 20 may include a first box portion 201 and a second box portion 202. The first box portion 201 and the second box portion 202 fit each other. The first box portion 201 and the second box portion 202 together define an accommodation space 203 configured to accommodate the battery cell 3. The second box portion 202 may be a hollow structure opened at one end. The first box portion 201 is a plate structure. The first box portion 201 fits and covers the opening of the second box portion 202 to form the box 20 that includes the accommodation space 203. Alternatively, the first box portion 201 and the second box portion 202 each may be a hollow structure opened at one end. The opening of the first box portion 201 fits the opening of the second box portion 202 to form the box 20 that includes the accommodation space 203. Definitely, the first box portion 201 and the second box portion 202 may be in various shapes, such as a cylinder or a cuboid.

To improve airtightness between the first box portion 201 and the second box portion 202 that are connected, a sealing element such as a sealant or a sealing ring may be disposed between the first box portion 201 and the second box portion 202.

Assuming that the first box portion 201 fits on the top of the second box portion 202, the first box portion 201 may also be referred to as an upper box, and the second box portion 202 may also be referred to as a lower box.

There may be a plurality of battery cells 3 in the battery 2. The plurality of battery cells 3 may be connected in series, parallel, or series-and-parallel pattern. The series-and-parallel pattern means a combination of series connection and parallel connection of the plurality of battery cells 3. The plurality of battery cells 3 may be directly connected in series, parallel, or series-and-parallel pattern, and then the whole of the plurality of battery cells 3 may be accommodated in the box 20. Alternatively, the plurality of battery cells 3 may be connected in series, parallel, or series-and-parallel pattern to form a battery module (not shown in the drawing) first. A plurality of battery modules are then connected in series, parallel, or series-and-parallel pattern to form a whole for being accommodated in the box 20. The plurality of battery cells 3 in the battery module may be electrically connected by a busbar component, so as to implement parallel, series, or series-and-parallel connection between the plurality of battery cells 3 in the battery module.

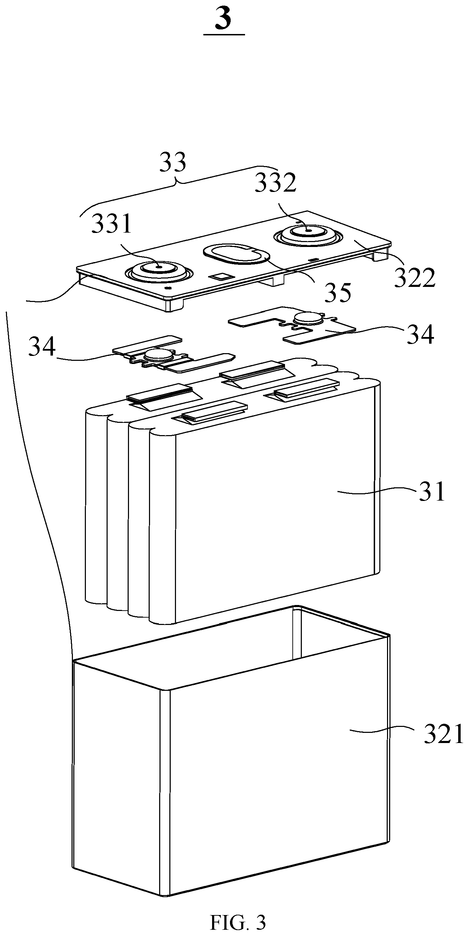

As shown in FIG. 3, which is a schematic structural diagram of a battery cell 3 according to an embodiment of this application, the battery cell 3 includes one or more electrode assemblies 31, a housing 321, and an end cap 322. The housing 321 and the end cap 322 form a shell or a battery box 32. Both the wall of the housing 321 and the end cap 322 are referred to as walls of the battery cell 3. For a cuboidal battery cell 3, the walls of the housing 321 include a bottom wall and four sidewalls. The shape of the housing 321 is determined depending on the shape of a combination of one or more electrode assemblies 31. For example, the housing 321 may be a hollow cuboid or cube or cylinder. One surface of the housing 321 is provided with an opening through which one or more electrode assemblies 31 can be placed into the housing 321 conveniently. For example, when the housing 321 is a hollow cuboid or cube, one of faces of the housing 321 is an opened face. The opened face is not walled so that the inside of the housing 321 communicates with the outside. When the housing 321 is a hollow cylinder, an end face of the housing 321 may be an opened face. That is, this end face is not walled so that the inside of the housing 321 communicates with the outside. The end cap 322 covers the opening and is connected to the housing 321 to form a closed cavity that is configured to accommodate the electrode assembly 31. The housing 321 is filled with an electrolyte such as an electrolytic solution.

The battery cell 3 may further include two electrode terminals 33. The two electrode terminals 33 may be disposed on the end cap 322. The end cap 322 is generally in the shape of a flat plate. Two electrode terminals 33 are fixed onto a flat surface of the end cap 322. The two electrode terminals 33 are a positive electrode terminal 331 and a negative electrode terminal 332 respectively. A connecting member 34, also referred to as a current collection component 34, is disposed corresponding to each electrode terminal 33, located between the end cap 322 and the electrode assembly 31, and configured to electrically connect the electrode assembly 31 and the electrode terminal 33.

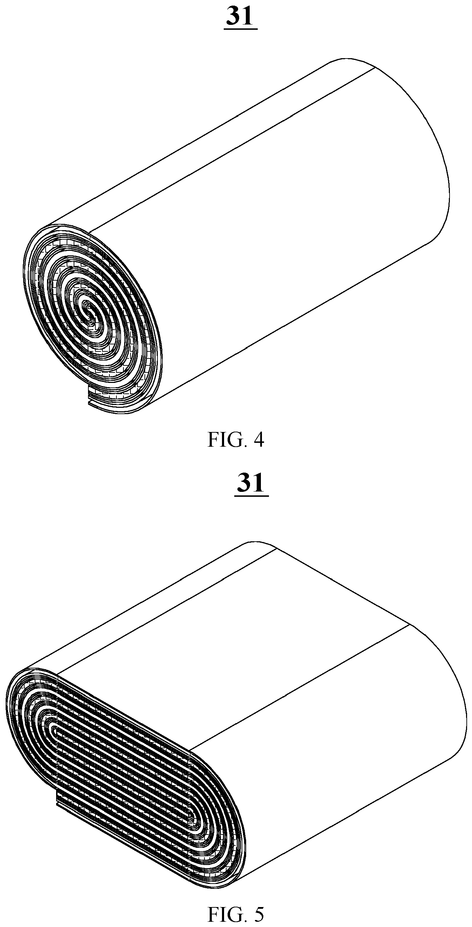

In the battery cell 3, one or more electrode assemblies 31 may be disposed depending on actual use requirements. As shown in FIG. 3, 4 independent electrode assemblies 31 are disposed in the battery cell 3.

A pressure relief mechanism 35 may be disposed on the battery cell 3. The pressure relief mechanism 35 is configured to be actuated to relieve an internal pressure or temperature when the internal pressure or temperature of the battery cell 3 reaches a threshold.

The pressure relief mechanism 35 may be any of various possible pressure relief structures, without being limited in this embodiment of this application. For example, the pressure relief mechanism 35 may be a temperature-sensitive pressure relief mechanism. The temperature-sensitive pressure relief mechanism is configured to melt when the internal temperature of the battery cell 3 equipped with the pressure relief mechanism 35 reaches a threshold; and/or, the pressure relief mechanism 35 may be a pressure-sensitive pressure relief mechanism. The pressure-sensitive pressure relief mechanism is configured to rupture when the internal air pressure of the battery cell 3 equipped with the pressure relief mechanism 35 reaches a threshold.

FIG. 4 and FIG. 5 are schematic diagrams of electrode assemblies according to different embodiments of this application. FIG. 4 shows a cylindrical electrode assembly, and FIG. 5 shows a cuboidal electrode assembly. The shape of the electrode assembly 31 is not limited herein. For clarity of description, the cuboidal electrode assembly shown in FIG. 5 is used as an example below.

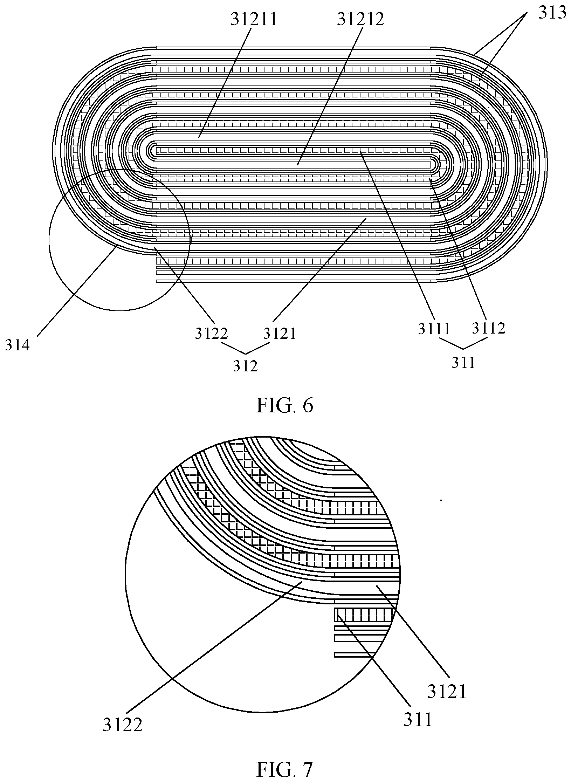

FIG. 6 is a front view of the electrode assembly shown in FIG. 5, and FIG. 7 is a close-up view of a region shown in FIG. 6. As shown in FIG. 6, the electrode assembly 31 includes a positive electrode layer 311, a negative electrode layer 312, and an separator 313. The positive electrode layer 311, the negative electrode layer 312, and the separator 313 are wound to form the electrode assembly 31. The separator 313 wraps on both sides of each positive electrode layer 311 and each negative electrode layer 312. A current collector of the negative electrode layer 312 is made of a three-dimensional porous metal material. As shown in FIG. 7, the negative electrode layer 312 includes a first negative electrode section 3121 and a second negative electrode section 3122 extending along a winding direction and connected to each other. A winding start end of the second negative electrode section 3122 is substantially aligned with a winding termination end of the positive electrode layer 311. A thickness $d_2$ of the second negative electrode section 3122 is less than a thickness $d_1$ of the first negative electrode section 3121.

The current collector of the positive electrode layer 311 is made of a metal material such as lithium metal or sodium metal. The material of the current collector is not limited herein. For clarity of description in the following embodiments, lithium metal is used as an example.

The current collector of the negative electrode layer 312 is made of a three-dimensional porous metal material. In other words, a large number of pores are diffused inside the metal. The pores provide positions in which metallic lithium in the lithium metal battery can be deposited. The positions are active sites of the negative electrode of the lithium metal battery, by which the metallic lithium are to be deposited in the porous metal material. Moreover, the three-dimensional porous metal material is of a very high porosity, and therefore, can greatly increase the energy density of the battery when being used as a negative electrode layer 312 in the battery 2.

The separator 313 is a microporous film configured to separate the positive electrode layer 311 from the negative electrode layer 312, and is a polymer functional material of a nanoscale microporous structure. A main function of the separator 313 is to prevent a short circuit caused by contact between the positive electrode and the negative electrode while allowing electrolyte particles to pass through. In an embodiment of this application, the separator 313 may be made of a polyethylene or polypropylene material of a high molecular weight because such two types of materials possess the advantages such as high strength, high resistance to acid and alkali corrosion, waterproofing, resistance to chemical reagents, high biocompatibility, and non-toxicity, but the type of the separator 313 is not particularly limited herein.

In the above technical solution, the positive electrode layer 311, the negative electrode layer 312, and the separator 313 are wound to form an electrode assembly 31. Each positive electrode layer 311 is separated from a negative electrode layer 312 by the separator 313 to prevent a short or open circuit of the battery 2 caused by direct contact between the positive electrode layer 311 and the negative electrode layer 312 in the battery 2. The negative electrode layer 312 of the three-dimensional porous metal material includes a first negative electrode section 3121 and a second negative electrode section 3122. A winding start end of the second negative electrode section 3122 is substantially aligned with a winding termination end of the positive electrode layer 311. A thickness of the second negative electrode section 3122 is less than a thickness of the first negative electrode section 3121. By controlling the thickness of the negative electrode layer 312, this application enables the active sites in the outermost second negative electrode section 3122 to match a capacity of metal ions in the positive electrode layer 311 in the battery 2 that uses the three-dimensional porous metal material as a negative electrode. In this way, this application effectively avoids growth of spongy "dead" metal caused by excess space in the second negative electrode section 3122, and in turn, improves the cycle performance of the battery 2, and also improves the space utilization rate inside the battery 2.

Optionally, the thickness $d_2$ of the second negative electrode section 3122 is:

$$d_2 = d_1(\frac{1}{2} * x\% + 1 - x\%).$$

In the above technical solution, the thickness $d_2$ of the second negative electrode section 3122 satisfies the above formula, so that the density of active sites on the surface of the second negative electrode section 3122 is the same as that of the first negative electrode section 3121, thereby ensuring an appropriate positive-to-negative electrode ratio in the second negative electrode section 3122.

The details are as follows:
The area of a section in which a single negative electrode layer 312 is directly oriented toward a single positive electrode layer 311 is S, and the porosity of the three-dimensional porous metal material is x%, so that the volume $V_1$ available for depositing metallic lithium in the first negative electrode section 3121 is:

$$V_1 = V_{pore} = S * d_1 * x\%.$$

The thickness of the second negative electrode section 3122 changes, and the porosity also changes, but the volume $V_{metal}$ of the three-dimensional porous metal material per unit area S does not change. $V_{metal}$ is:

$$V_{metal} = S * d_1 * (1 - x\%).$$

The second negative electrode section 3122 just needs to provide the outermost positive electrode layer 311 with a volume $V_2$ for depositing the metallic lithium, so that $V_2$ is:

$$V_2 = \frac{1}{2}V_1 = \frac{1}{2}S * d_1 * x\%.$$

The total volume V of the three-dimensional porous metal material of the second negative electrode section 3122 does not change, and V is:

$$V = V_2 + V_{metal} = \frac{1}{2}S * d_1 * x\% + S * d_1 * (1 - x\%).$$

To ensure that the density of the active sites on the surface of the second negative electrode section 3122 is identical to that of the first negative electrode section 3121, the area of the section in which the second negative electrode section 3122 is directly oriented toward the positive electrode layer 311 keeps identical to the area of the section in which the first negative electrode section 3121 is directly oriented toward the positive electrode layer 311. The two sides of the equation are synchronously divided by S to obtain $d_2$:

$$d_2 = d_1(\frac{1}{2} * x\% + 1 - x\%).$$

Optionally, when $d_1$ is 200 $\mu$m, x% is 80%, giving $d_2$ as 120 $\mu$m.

Optionally, x% may be 30% to 97%. For example, in an embodiment of this application, x% may be 30% to 75%.

Optionally, the thickness $d_2$ of the second negative electrode section 3122 is:

$$d_2 = d_1(\frac{1}{2} * x\% + (1 - x\%)/(1 + k\%)).$$

In the above technical solution, the thickness $d_2$ of the second negative electrode section 3122 satisfies the above formula, so that the density of active sites on the surface of the second negative electrode section 3122 is the same as that of the first negative electrode section 3121, thereby ensuring an appropriate positive-to-negative electrode ratio in the second negative electrode section 3122.

The details are as follows:

The volume $V_1$ available for depositing metallic lithium in the first negative electrode section 3121, the volume $V_{metal}$ of the three-dimensional porous metal material, and the volume $V_2$ available for depositing metallic lithium in the second negative electrode section 3122 are the same as those in the preceding embodiment, and are not described here again.

The elongation rate of the three-dimensional porous metal material is k%. After elongation, $S_{metal}$ is:

$$S_{metal} = S * (1 + k\%).$$

Therefore, the volume $V_{metal'}$ of the second negative electrode section 3122 is:

$$V_{metal'} = V_{metal}/(1 + k\%).$$

The total volume V of the three-dimensional porous metal material of the second negative electrode section 3122 does not change, and V is:

$$V = V_2 + V_{V_{metal'}} = \frac{1}{2}S * d_1 * x\% + S * d_1 * (1 - x\%)/(1 + k\%).$$

To ensure that the density of the active sites on the surface of the second negative electrode section 3122 is identical to that of the first negative electrode section 3121, the area of the section in which the second negative electrode section 3122 is directly oriented toward the positive electrode layer 311 keeps identical to the area of the section in which the first negative electrode section 3121 is directly oriented toward the positive electrode layer 311. The two sides of the equation are synchronously divided by S to obtain $d_2$:

$$d_2 = d_1(\frac{1}{2} * x\% + (1 - x\%)/(1 + k\%)).$$

Optionally, when $d_1$ is 200 $\mu$m, x% is 80% and k% is 5%, giving $d_2$ as 118 $\mu$m.

Optionally, x% may be 30% to 97%. For example, in an embodiment of this application, x% may be 30% to 75%.

Optionally, k% may be 0% to 10%. For example, in an embodiment of this application, k% may be 0% to 5%.

Optionally, the second negative electrode section 3122 is configured to be calendered so that the thickness $d_2$ of the second negative electrode section 3122 is less than the thickness $d_1$ of the first negative electrode section 3121.

After being treated, the second negative electrode section 3122 possesses the same lithium metal deposition surface density as the first negative electrode section 3121, and corresponds to the outermost positive electrode layer 311. The second negative electrode section 3122 may be treated in diverse ways as long as the thickness meets the requirement. The treatment method is not limited herein.

In the above technical solution, the second negative electrode section 3122 is calendered so that the thickness of the second negative electrode section 3122 is less than that of the first negative electrode section 3121. This method is simple to implement, highly operable, and widely applicable in production. In addition, the calendered second negative electrode section 3122 not only possesses the same surface density as the first negative electrode section 3121, but also improves mechanical strength of the battery 2.

Optionally, the second negative electrode section 3122 surrounds the outermost positive electrode layer 311 for at most one coil.

In order for the outermost second negative electrode section 3122 to possess the same metal ion deposition surface density as the first negative electrode section 3121, the second negative electrode section 3122 is calendered so as to be aligned with the outermost positive electrode layer 311. If the length of the second negative electrode section 3122 is greater than the length of the outermost positive electrode layer 311, a positive-to-negative electrode ratio imbalance will still occur in the battery 2.

In the above technical solution, in a conventional battery 2 that uses a three-dimensional porous metal material as a negative electrode, the negative electrode layer 312 in the middle corresponds to an upper positive electrode layer 311 and a lower positive electrode layer. The outermost negative electrode layer 312 corresponds to a positive electrode layer 311 on a single side. In this way, the capacity is mismatched between the outermost negative electrode layer 312 and the positive electrode layer 311, thereby giving rise to spongy "dead" metal, and eventually resulting in a short or open circuit of the battery 2. By causing the second negative electrode section 3122 to surround the outermost positive electrode layer 311 and limiting the surrounding length of the second negative electrode section 3122 to one coil, this application ensures that the outermost second negative electrode section 3122 and the middle region possess the same density of active sites for metal ion deposition on a surface, and achieves a capacity balance between the positive electrode and the negative electrode of the battery 2 as a whole.

Optionally, the positive electrode layer 311 includes a first positive electrode section 3111 and a second positive electrode section 3112 extending along the winding direction and connected to each other. The winding start end of the second positive electrode section 3112 is substantially aligned with the winding start end of the first negative electrode section 3121.

In the above technical solution, the positive electrode layer 311 includes the first positive electrode section 3111 and the second positive electrode section 3112. The winding start end of the second positive electrode section 3112 is substantially aligned with the winding start end of the first negative electrode section 3121, thereby ensuring that there is a first positive electrode layer 3111 corresponding to the innermost negative electrode layer 312, and in turn, ensuring a balanced positive-to-negative electrode ratio in the innermost coil of the electrode assembly 31.

Optionally, the first positive electrode section 3111 is located between a first inner negative electrode layer 31211 and a second inner negative electrode layer 31212. The first inner negative electrode layer 31211 is a first straight section of the negative electrode layer 312 along the winding direction of the negative electrode layer 312. The second inner negative electrode layer 31212 is a second straight section of the negative electrode layer 312 along the winding direction of the negative electrode layer 312.

In a conventional battery 2 that employs a three-dimensional porous metal material, the innermost negative electrode layer 312 corresponds to no positive electrode layer 311. In other words, a single positive electrode layer 311 most immediately adjacent to the innermost negative electrode layer 312 corresponds to double-layer negative active sites. In this way, the capacity is mismatched between the innermost negative electrode layer 312 and the positive electrode layer 311.

In the above technical solution, the positive electrode layer 311 is inserted between the innermost negative electrode layers 312. To be specific, the first positive electrode layer 3111 is inserted between the innermost negative electrode layers 312. The second positive electrode layer 3112 is substantially aligned with the first negative electrode section 3121, thereby achieving a capacity match between the innermost negative electrode layer 312 and the positive electrode layer 311 in the electrode assembly 31, and in turn, sufficiently utilizing the negative electrode material, and improving the energy density of the battery 2 as a whole.

Optionally, the winding start end of the first positive electrode section 3111 extends to a bend of the negative electrode layer 312 between the first inner negative electrode layer 31211 and the second inner negative electrode layer 31212.

In the above technical solution, the first positive electrode section 3111 is made to be immediately between the innermost negative electrode layers 312. That is, the innermost negative electrode layer 312 is ensured to correspond to a positive electrode layer 311, thereby maximizing the utilization rate of the active material and space inside the battery 2.

Optionally, the thickness of the positive electrode layer 311 is identical to the thickness of the first negative electrode section 3121.

To achieve an overall balance of the positive-to-negative electrode ratio in the electrode assembly 31, the first negative electrode section 3122 is calendered, and the first positive electrode section 3111 is inserted between the first inner negative electrode layer 31211 and the second inner negative electrode layer 31212. In this way, the innermost and innermost negative electrode layers 312 keep the same number of metal ion active sites as the middle region. To ensure the overall balance of the electrode assembly 31, the thickness of the positive electrode layer 311 needs to keep identical to the thickness of the first negative electrode section 3121.

In the above technical solution, the positive electrode layer 311 includes the first positive electrode section 3111 and the second positive electrode section 3112. The first positive electrode section 3111 corresponds to the innermost negative electrode layer 312, and the second positive electrode section 3112 corresponds to the remaining negative electrode layers 312. By ensuring the identicalness of thickness between the positive electrode layer 311 and the first negative electrode section 3121, this application maintains a matched state of the anion-to-cation ratio of the entire electrode assembly 31, avoids growth of spongy "dead" metal in the battery 2, and in turn, enhances the cycle performance of the battery.

An embodiment of this application further provides a battery cell 3. The battery cell includes: the electrode assembly 31 disclosed in the preceding embodiment; a housing 321 with an opening, configured to accommodate the electrode assembly 31; and an end cap 322, configured to seal the opening.

An embodiment of this application further provides a battery 2. The battery includes the battery cell 3 disclosed in the preceding embodiment.

An embodiment of this application further provides an electrical device. The electrical device includes the battery 2 disclosed in the preceding embodiment. The battery 2 is configured to provide electrical energy.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

**Claims**

1. An electrode assembly, **characterized in that** the electrode assembly comprises:

   a positive electrode layer, a negative electrode layer, and an separator, wherein the positive electrode layer, the negative electrode layer, and the separator are wound to form the electrode assembly, the separator wraps on both sides of each positive electrode layer and each negative electrode layer, and a current collector of the negative electrode layer is made of a three-dimensional porous metal material; and
   the negative electrode layer comprises a first negative electrode section and a second negative electrode section extending along a winding direction and connected to each other, a winding start end of the second negative electrode section is substantially aligned with a winding termination end of the positive electrode layer, and a thickness $d_2$ of the second negative electrode section is less than a thickness $d_1$ of the first negative electrode section.

2. The electrode assembly according to claim 1, **characterized in that** the thickness $d_2$ of the second negative electrode section is:

$$d_2 = d_1(\frac{1}{2} * x\% + 1 - x\%)$$

   wherein x% is a porosity of the first negative electrode section.

3. The electrode assembly according to claim 1, **characterized in that** the thickness $d_2$ of the second negative electrode section is:

$$d_2 = d_1(\frac{1}{2} * x\% + (1 - x\%)/(1 + k\%))$$

   wherein x% is a porosity of the first negative electrode segment, and k% is an elongation rate of the negative electrode layer.

4. The electrode assembly according to claim 2 or 3, **characterized in that** the second negative electrode section is configured to be calendered so that the thickness $d_2$ of the second negative electrode section is less than the thickness $d_1$ of the first negative electrode section.

5. The electrode assembly according to any one of claims 1 to 4, **characterized in that** the second negative electrode section surrounds an outermost positive electrode layer for at most one coil.

6. The electrode assembly according to claim 1, **characterized in that** the positive electrode layer comprises a first positive electrode section and a second positive electrode section extending along the winding direction and connected to each other, and a winding start end of the second positive electrode section is substantially aligned with a winding start end of the first negative electrode section.

7. The electrode assembly according to claim 6, **characterized in that** the first positive electrode section is located between a first inner negative electrode layer and a second inner negative electrode layer, the first inner negative electrode layer is a first straight section of the negative electrode layer along the winding direction, and the second inner negative electrode layer is a second straight section of the negative electrode layer along the winding direction.

8. The electrode assembly according to claim 6 or 7, **characterized in that** a winding start end of the first positive electrode section extends to a bend of the negative electrode layer between the first inner negative electrode layer and the second inner negative electrode layer.

9. The electrode assembly according to any one of claims 1 to 8, **characterized in that** a thickness of the positive electrode layer is identical to a thickness of the first negative electrode section.

10. A battery cell, **characterized in that** the battery cell comprises:

    the electrode assembly according to any one of claims 1 to 9;
    a housing with an opening, configured to accommodate the electrode assembly; and
    an end cap, configured to seal the opening.

11. A battery, **characterized in that** the battery comprises:
    a plurality of the battery cells according to claim 10.

12. An electrical device, **characterized in that** the electrical device comprises:
    the battery according to claim 11, wherein the battery is configured to provide electrical energy.

## 1

FIG. 1

## 2

FIG. 2

## 3

FIG. 3

**31**

FIG. 4

**31**

FIG. 5

FIG. 6

FIG. 7

## INTERNATIONAL SEARCH REPORT

| International application No. |
|---|
| **PCT/CN2023/071234** |

**A.    CLASSIFICATION OF SUBJECT MATTER**

H01M10/0587(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电极, 阳极, 阴极, 正极, 负极, 集流, 集电, 三维, 多孔, 泡沫, 厚度, 薄, cell, battery, electrode, anode, cathode, positive, negative, collector, dimensional, porous, foam, thickness, thin+

**C.    DOCUMENTS CONSIDERED TO BE RELEVANT**

| Category* | Citation of document, with indication, where appropriate, of the relevant passages | Relevant to claim No. |
|---|---|---|
| X | EP 0780920 A1 (ASAHI KASEI KOGYO KABUSHIKI KAISHA) 25 June 1997 (1997-06-25)<br>    description, column 3, line 53-column 30, line 7, and figures 1-6 | 1-12 |
| A | CN 102195096 A (DONGGUAN AMPEREX TECHNOLOGY LTD. et al.) 21 September 2011 (2011-09-21)<br>    entire document | 1-12 |
| A | CN 101212070 A (BYD CO., LTD.) 02 July 2008 (2008-07-02)<br>    entire document | 1-12 |
| A | CN 103490041 A (DONGGUAN AMPEREX TECHNOLOGY LTD.) 01 January 2014 (2014-01-01)<br>    entire document | 1-12 |
| A | CN 206098526 U (NINGDE AMPEREX TECHNOLOGY LTD.) 12 April 2017 (2017-04-12)<br>    entire document | 1-12 |
| A | CN 110612628 A (ZHAMU ARUNA) 24 December 2019 (2019-12-24)<br>    entire document | 1-12 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 March 2023** | **16 March 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2023/071234** |

**C.      DOCUMENTS CONSIDERED TO BE RELEVANT**

| Category* | Citation of document, with indication, where appropriate, of the relevant passages | Relevant to claim No. |
| --- | --- | --- |
| A | JP 2002280079 A (SONY CORP.) 27 September 2002 (2002-09-27)<br>     entire document | 1-12 |

Form PCT/ISA/210 (second sheet) (July 2022)

**INTERNATIONAL SEARCH REPORT**
Information on patent family members

International application No.

**PCT/CN2023/071234**

| Patent document cited in search report | | | Publication date (day/month/year) | Patent family member(s) | | | Publication date (day/month/year) |
|---|---|---|---|---|---|---|---|
| EP | 0780920 | A1 | 25 June 1997 | DE | 69535472 | D1 | 31 May 2007 |
| | | | | DE | 69535472 | T2 | 03 January 2008 |
| | | | | CA | 2201344 | A1 | 04 April 1996 |
| | | | | CA | 2201344 | C | 01 February 2000 |
| | | | | EP | 0780920 | A4 | 21 June 2000 |
| | | | | EP | 0780920 | B1 | 18 April 2007 |
| | | | | AT | 360266 | T | 15 May 2007 |
| | | | | WO | 9610273 | A1 | 04 April 1996 |
| CN | 102195096 | A | 21 September 2011 | None | | | |
| CN | 101212070 | A | 02 July 2008 | None | | | |
| CN | 103490041 | A | 01 January 2014 | None | | | |
| CN | 206098526 | U | 12 April 2017 | None | | | |
| CN | 110612628 | A | 24 December 2019 | WO | 2018208660 | A1 | 15 November 2018 |
| | | | | JP | 2020518989 | A | 25 June 2020 |
| | | | | JP | 7195275 | B2 | 23 December 2022 |
| | | | | KR | 20190140060 | A | 18 December 2019 |
| | | | | US | 2019027788 | A1 | 24 January 2019 |
| | | | | US | 10903527 | B2 | 26 January 2021 |
| JP | 2002280079 | A | 27 September 2002 | US | 2004096733 | A1 | 20 May 2004 |
| | | | | WO | 02078113 | A1 | 03 October 2002 |
| | | | | EP | 1372209 | A1 | 17 December 2003 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210319849X